# EUROPÄISCHE PATENTANMELDUNG

(11) **EP 0 878 632 A2**
(43) Veröffentlichungstag der Anmeldung: **18.11.1998**
(21) Anmeldenummer: 98108044.3
(22) Anmeldetag: 02.05.1998
(51) Int. Cl.: F16D 3/62

(54) **Wellengelenk**

(30) Priorität: 17.05.1997 DE 19720857
(71) Anmelder: Daimler-Benz Aktiengesellschaft, 70567 Stuttgart (DE)
(72) Erfinder: Albers, Hartmut, 70178 Stuttgart (DE)

(57) **Zusammenfassung**

Die Erfindung betrifft ein Wellengelenk mit an den einander zugekehrten Wellenenden (2) angeordneten Flansche (3) mit vorzugsweise jeweils drei axial abragenden Mitnahmezapfen (4), die gegenseitig auf Lücke angeordnet und gleichmäßig am Umfang eines gemeinsamen Teilkreises angeordnet sind. Die Mitnahmezapfen (4) sind untereinander drehstarr mit einem flexiblen Gelenkring (6) verbunden, der in den Eckpunkten mit Steckhülsen (7) für die Mitnahmezapfen (4) versehen ist. Der mehrteilige Gelenkring (6) ist durch einen Kranz mehrerer, ovaler Mitnahmeschlingen (8) gebildet, die jeweils zwei benachbarte Steckhülsen (7) umschlingen. Um selbst bei hoher mechanischer und thermischer Belastung des Wellengelenkes ohne weiteres relativ große Beugewinkel während der Rotation zulassen zu können, sind erfindungsgemäß die ovalen Mitnahmeschlingen (8) mittelbar oder unmittelbar auf den Mitnahmezapfen (4) aufgrund eines Paares von im Meridianschnitt runden Berührungsflächen an der Steckhülse bzw. an der Mitnahmeschlinge axial gleitend schwenkbar gelagert. Hierbei können die Kontaktflächenpaare - radial von außen gesehen - konkav oder konvex ausgebildet sein. Bei konvexer Kontaktflächenform ist die Kugelform zu bevorzugen. Weitere zweckmäßige Ausgestaltungen werden genannt.

## Beschreibung

Die Erfindung geht aus von einem Wellengelenk nach dem Oberbegriff von Anspruch 1, wie es beispielsweise aus der DE 43 04 274 C1 als bekannt hervorgeht.

Derartige Wellengelenke werden beim Einsatz in Fahrzeugen nicht nur mechanisch sehr stark durch Drehmomentspitzen und durch spannungsüberhöhende Gelenkbewegungen belastet, sondern es tritt durch Wärmeleitung und durch Wärmeabstrahlung in der Nahe befindlicher, z.T. sehr heißer Teile sowie durch eigene bewegungsbedingte Wärmeentwicklung der Gelenkteile auch eine thermische Belastung des Wellengelenkes auf. Durch die Bauteilerwärmung wird bei Kunststoffteilen die Belastbarkeit der eingesetzten Werkstoffe herabgesetzt, so daß auch die thermische Belastung der Wellengelenke für deren mechanische Belastbarkeit relevant ist.

Viele bekannte Wellengelenke, wie sie insbesondere für Leichtbaukonstruktionen von Gelenkwellen vorgesehen sind, weisen an den Enden der beiden durch das Gelenk verbundenen Wellen jeweils Flansche mit drei in Richtung zum Wellengelenk hin axial abragenden Mitnahmezapfen auf, wobei die insgesamt sechs, gegenseitig auf Lücke angeordnete Mitnahmezapfen gleichmäßig am Umfang eines gemeinsamen Teilkreises angeordnet sind. Die Mitnahmezapfen sind durch einen flexiblen, sechseckigen, in den Eckpunkten mit Steckhülsen versehenen Gelenkring untereinander drehstarr verbunden. Der Gelenkring ist zwischen den Steckhülsen in sich axial elastische verformbar, so daß die beiden über den Gelenkring verbundenen Flansche - begrenzte - Winkelbewegungen in jeder beliebigen Richtung, auch während der Drehung ausführen können. Durch diese Winkelbewegung wird der Gelenkring axial gewellt und die Schenkel des Polygons werden tordiert, wodurch im Rahmen der Elastizität entsprechend des Hook'schen Gesetzes Biege- und Torsionsspannungen entstehen, die sich den drehmomentbedingten Betriebsbeanspruchungen überlagern. Durch diese Überlagerung von Beanspruchungen kann die Werkstoff-Festigkeit erreicht werden. Demgemäß können aus Grün-den der Dauerfestigkeit der Wellengelenke nur beschränkte Beugewinkel zugelassen werden.

Die Anzahl von drei Mitnahmezapfen je Flansch, also insgesamt sechs Mitnahmezapfen im Wellengelenk ist nicht zwingend erforderlich. Es sind auch nur zwei Zapfen je Flansch, also insgesamt vier Mitnahmezapfen denkbar, wobei jedoch aufgrund der Verteilung der Umfangsbelastung auf diese geringe Zahl von Mitnahmeelementen diese stärker beansprucht sind als bei einer höheren Anzahl von Mitnehmern. Auch vier oder mehr Zapfen je Flansch, also insgesamt acht oder mehr Mitnahmezapfen im Wellengelenk sind möglich, wobei mit zunehmender Anzahl von Mitnahmezapfen der erforderliche Gelenkdurchmesser größer und/oder der tolerierbare Beugewinkel kleiner wird. Deshalb ist als am häufigsten anzutreffender Kompromiß zwischen Einzelteilbelastung einerseits und Gelenkgröße andererseits die angesprochene Anzahl von drei bzw. sechs Mitnahmezapfen anzutreffen.

Die DE 41 40 311 A1 zeigt einen sechseckigen Gelenkring aus Faserverbundmaterial in Form einer Ringscheibe, bei dem in den verstärkten Eckbereichen axiale Steckhülsen eingelassen sind. Die geradlinigen Bereiche zwischen zwei benachbarten Ecken sind durch einen relativ dünnen, in der Ebene der Ringscheibe sich erstreckenden Steg aus mehreren zusammenhängenden Lagen von ausgehärtetem Faserverbundmaterial gebildet. Dieser Steg ist in radialrichtung relativ breit. Beim Beugen des Wellengelenkes werden diese Stege nicht nur gebogen sondern auch verdrillt. Zwar lassen sich die dünnen Stege bei relativ geringen Biegespannungen elastisch verbiegen, jedoch treten wegen der von einer Rotationssymmetrie stark abweichenden Form der Stege beim Verdrillen derselben vor allem an ihrem inneren und äußeren Rand hohe Spannungen auf.

Die eingangs genannte DE 43 04 274 C1 zeigt einen sechseckigen Gelenkring, bei dem die in den Eckbereichen angeordneten Steckhülsen paarweise jeweils durch in sich endlose, ovale Mitnahme-Schlingen miteinander verbunden sind, die um zwei benachbarte Steckhülsen außenseitig herumgeschlungen sind. Und zwar sind abwechselnd breite, mittig liegende Mitnahmeschlingen und ein Paar randseitig liegender schmaler Mitnahmeschlingen im Gelenkring angeordnet. Die breite Mitnahmeschlinge ist etwa dreimal so breit wie ihre radiale Wandstärke mißt; die beiden schmalen Mitnahmeschlingen sind gemeinsam etwa ebenso breit. Die Mitnahmeschlingen sind auf den Steckhülsen radial verschwenkbar, so daß der Gelenkring als Einzelteil in seiner Form gelenkig veränderbar ist. Zum Zusammenhalten aller Teile des Gelenkringes und zur Verhinderung von Schmutzzutritt sind die Teile des Gelenkringes in eine gummielastische Masse geringer Härte eingebettet und vollständig umschlossen. Aufgrund der in Relation zur axial gemessenen Breite der Mitnahmeschlingen relativ geringen radialen Wandstärke bieten sie gute Voraussetzungen für eine Aufnahme des Umfangszuges bei geringen Spannungsüberhöhungen in den Krümmungen der Mitnahmeschlingen. Beim Beugen dieses Wellengelenkes werden die Mitnahmeschlingen in Axialrichtung verkantet oder gekippt und außerdem verdrillt, wobei an unterschiedlichen Stellen der Mitnahmeschlingen starke Spannungsüberhöhungen auftreten. Beim Verkanten kommt es zu einer einseitigen Kantenauflage der Schlingenkrümmung auf der Steckhülse und dementsprechend dort zu einer Spannungskonzentration. Beim Verdrillen der relativ breiten Mitnahmeschlingen treten - ähnlich wie bei den Stegen der zuvor geschilderten Gelenkscheibe nach der DE 41 40 311 A1 - an den Rändern Spannugsüberhöhungen wenn auch auf geringerem Niveau als dort auf. Dieser Typ von Gelenkringen bietet daher keine guten Voraussetzungen für eine gute Beweglichkeit des Wellengelenkes bei gleichzeitig hoher Drehmomentbelastung.

Aufgabe der Erfindung ist es, das gattungsgemäß zugrundegelegte Wellengelenk dahingehend zu verbessern, daß bei hoher mechanischer und thermischer Belastung ohne weiteres relativ große Beugewinkel während der Rotation zugelassen werden können.

Diese Aufgabe wird - ausgehend von dem gattungsgemäß zugrundegelegten Wellengelenk - erfindungsgemäß durch die kennzeichnenden Merkmale von Anspruch 1 gelöst. Danach können die Mitnahmeschlingen auf den Steckhülsen unter axialer Gleitbewegung verschwenkt werden, so daß zumindest aufgrund des Axialhubes alleine, den die Mitnahmezapfen zueinander ausführen, die Mitnahmeschlingen nicht elastisch verformt und demgemäß in soweit auch nicht einer zusätzlichen Belastung unterworfen werden. Sofern die Gleitflächen kugelförmig gestaltet sind, können sogar Verdrillungen von den Mitnahmeschlingen ferngehalten werden.

Zweckmäßige Ausgestaltungen der Erfindung können den Unteransprüchen entnommen werden; im übrigen ist die Erfindung anhand eines in der Zeichnung dargestellten Ausführungsbeispieles nachfolgend noch erläutert; dabei zeigen:
- Fig. 1: eine seitliche Schnitt-Ansicht durch bzw. auf ein Wellengelenk,
- Fig. 2: eine vergrößerte Einzeldarstellung der Einzelheit II aus Figur 1,
- Fig. 3: eine axiale Ansicht auf den Wellenflansch der in Figur 1 links dargestellten Welle gemäß einem Schnitt entlang der Linie III-III,
- Fig. 4: eine nochmals vergrößerte Einzeldarstellung einer Mitnahmeschlinge des Wellengelenkes nach Figur 1 in axialer Ansicht im Einbauzustand einschließlich eingefügtem Druckstab,
- Fig. 5: eine Einzeldarstellung eines Druckstabes aus Figur 4 gemäß dortiger Schnittlinie V-V,
- Fig. 6a bis 6d: vier einzelne radiale Querschnitte durch die Mitnahmeschlinge nach Figur 5 entlang den Schnittlinien a-a. b-b, c-c bzw. d-d, die über den Umfang sich ändernde innere Begrenzungslinie des Querschnitts zeigend,
- Fig. 7: eine axiale Ansicht auf eine modifizierte Mitnahmeschlinge mit gekrümmt verlaufenden Flachseiten des Ovals,
- Fig. 8: eine vergrößerte Einzeldarstellung ähnlich der Darstellung gemäß Figur 2, jedoch von einem modifizierten Wellengelenk mit kugelflächenförmigem Umfangswulst auf der Steckhülse,
- Fig. 9: eine vergrößerte, perspektivische Einzeldarstellung eines Gleitelementes mit integriertem Gleitschuh für einen Druckstab aus dem Wellengelenk nach Figur 8,
- Fig. 10: eine Modifikation der Gleitelemente nach Figur 9, wobei das Gleitelement für die Mitnahmeschlinge und der Gleitschuh für den Druckstab baulich voneinander getrennt sind,
- Fig. 11: eine ähnliche Schnittdarstellung wie Figur 4, jedoch von dem Wellengelenk nach Figur 8 in axialer Ansicht im Einbauzustand einschließlich eingefügtem Druckstab,
- Fig. 12 und 13: axiale Schnitt-Ansicht (Figur 12) und radialer Schnitt (Figur 13) durch eine im Querschnitt gewölbte flache Mitnahmeschlinge mit gewölbten Längsseiten des Ovals,
- Fig. 14: eine axiale Ansicht auf ein weiteres Ausführungsbeispiel einer Steckhülse mit sie umschlingenden Mitnahmeschlingen als Variante zu der Ausführung nach Figur 4,
- Fig. 15: eine radiale Ansicht auf die Steckhülse und die Mitnahmeschlingen nach Figur 14, wobei die eine Mitnahmeschlinge im Scheitelpunkt im Meridianschnitt gezeigt ist und
- Fig. 16: eine Abfolge von vier einzelnen radialen Querschnitten durch die Mitnahmeschlinge und die zugehörige Aufnahmerille der Steckhülse nach Figur 14 entlang den Schnittlinien a-a. b-b, c-c bzw. d-d, die über den Umfang der Steckhülse hinweg geänderten Querschnitt der Mitnahmeschlinge und der zugehörigen Aufnahmerille zeigend.

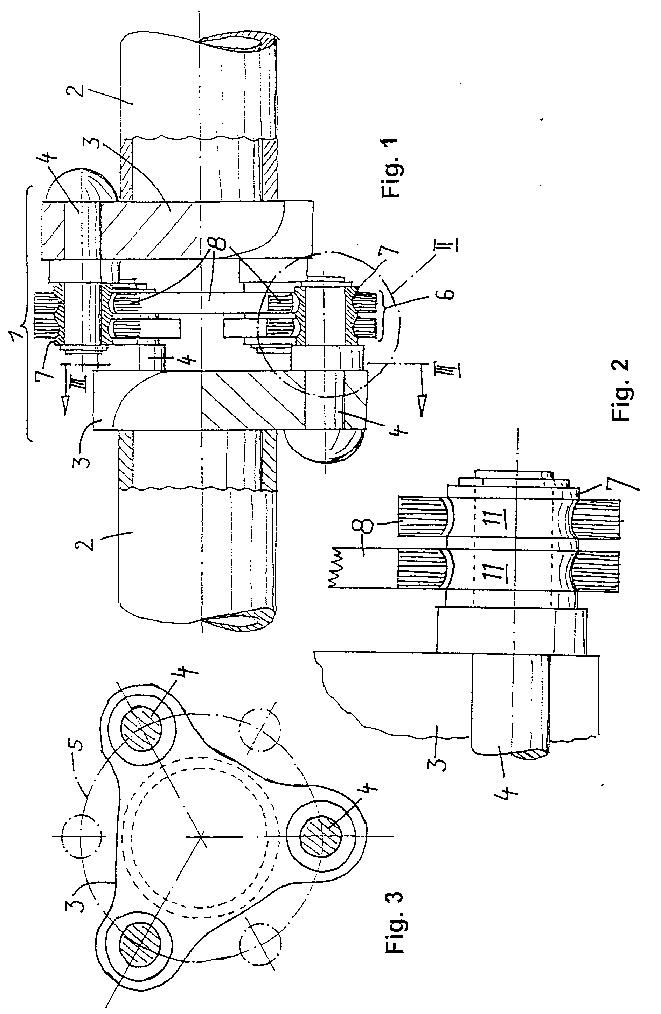

In Figur 1 ist ein Wellengelenk 1 gezeigt, mit dem zwei Wellen 2 drehsteif aber innerhalb gewisser Grenzen axial und/oder winkelweglichen miteinander verbunden werden können. An den Enden der beiden durch das Gelenk verbundenen Wellen ist jeweils ein Flansch 3 angeordnet, von denen jeder beim dargestellten Ausführungsbeispiel jeweils drei in Richtung zum Wellengelenk hin axial abragende Mitnahmezapfen 4 trägt, wobei die insgesamt sechs Mitnahmezapfen, die wechselseitig auf Lücke angeordnet sind, gleichmäßig am Umfang eines gemeinsamen Teilkreises 5 angeordnet sind. Die Flansche 3 sind - wie Figur 3 deutlicher zeigt - in dem zwischen den Mitnahmezapfen liegenden Umfangsbereichen ausgespart, also im Prinzip sternförmig ausgebildet. Aufgrund dieser Sternform der gegenüberliegenden Flansche mit gegenseitig auf Lücke angeordneten Armen können diese bei Winkelbewegungen ineinander eintauchen, wodurch eine größere Winkelbeweglichkeit des Wellengelenkes gegeben ist. Die Mitnahmezapfen 4 an den Enden der Flanscharme sind wechselweise durch einen flexiblen, regelmäßig polygonartigen, vorzugsweise sechseckigen Gelenkring 6 untereinander drehstarr verbunden, der in den Eckpunkten mit Steckhülsen 7, 7' versehen ist. Die zwischen den Steckhülsen liegenden Schenkel des Gelenkringes sind in sich axial elastisch verformbar und verdrillbar. Der Gelenkring seinerseits ist mehrteilig ausgebildet und durch einen Kranz mehrerer, jeweils zwei benachbarte Steckhülsen 7 und 7 bzw. 7' und 7' umschlingender, in sich endloser, ovaler Mitnahmeschlingen 8, 8', 10, 10'bzw. 18 nach Art einzelner Kettenglieder zusammengesetzt, die auf den Steckhülsen jeweils radial verschwenkbar sind, so daß der Gelenkring 6 in seiner Form gelenkig veränderbar ist. Allerdings werden durch die axiale Verbiegung und Verdrillung der einzelnen Mitnahmeschlingen diese zu den drehmomentbedingten Zugbelastungen zusätzlich durch axiales Verkanten und durch Verdrillen belastet, wodurch die vom Wellengelenke tolerierbare Gesamtbelastung entsprechend niedriger angesetzt werden muß.

Um das Wellengelenk auch bei hoher mechanischer und thermischer Belastung während der Rotation ohne weiteres relativ stark abwinkeln zu können, ohne die Dauerbelastbarkeit des Wellengelenks in unzumutbarer Weise zu beeinträchtigen, sind die Mitnahmeschlingen 8, 10, 18 erfindungsgemäß axial schwenkbar auf den Steckhülsen 7, 7' gelagert. Zu diesem Zweck sind die ovalen Mitnahmeschlingen - allgemein gesagt - mittelbar oder unmittelbar auf den Mitnahmezapfen 4 aufgrund eines Paares von im Meridianschnitt runden Berührungsflächen an der Steckhülse bzw. an der Mitnahmeschlinge axial gleitend schwenkbar gelagert.

Dieser Erfindungsgedanke ist auf verschiede Arten realisierbar. Bei dem in den Figuren 1 bis 6 dargestellten Ausführungsbeispiel ist auf der Außenseite der Steckhülsen jeweils eine im Querschnitt kreisbogenförmig gestaltete Umfangsrille 11 angebracht, in die innenseitig verrundete Mitnahmeschlingen 8 eingreifen. Dadurch sind die Mitnahmeschlingen 8 in der jeweils zugehörigen Umfangsrille 11 unter axialer Gleitbewegung des Schlingenquerschnittes axial verschwenkbar.

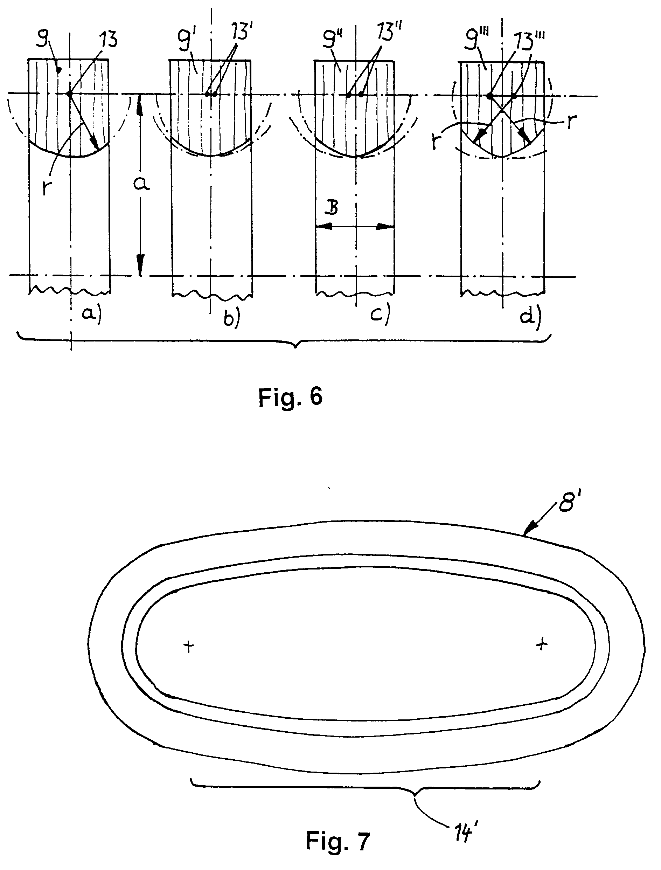

Im Zustand einer axialen Verschwenkung der Mitnahmeschlinge 8 in der Umfangsrille 11 der Steckhülse 7 ist die Ebene der Mitnahmeschlinge zu der der Umfangsrille geneigt und die MitnahmeSchlinge läuft schräg in die Umangsrille ein. Zwar liegt die Schlinge dann am Scheitelpunkt des Ovals noch zwangfrei an, jedoch kommt es, sofern nicht besondere Vorkehrungen getroffen werden, im Bereich des Einlaufes bzw. Auslaufes der Schlinge in die Umfangsrille seitlich zu Verzwängungen, die bei schwingenden Axialverschwenkungen - bei jedem Umlauf des Wellengelenkes wird je ein vollständiger Hin- und Her-Schwingvorgang vollführt - zu Verschleiß der Mitnahmeschlinge in diesem Bereich und zu einer vorzeitigen Zerstörung führen können. Diese Erscheinung wird durch eine mit der axialen Verschwenkung einhergehende elastische Verdrillung der Mitnahmeschlinge noch verstärkt. Um dadurch bedingte unzulässig starke Verzwängungen zu vermeiden, ist die kreisbogenförmige Begrenzungskontur des Querschnitts 9 der Mitnahmeschlinge 8 über deren Umfang hinweg kontinuierlich verändert. Und zwar ist - ausgehend vom Scheitelpunkt der ovalen Mitnahmeschlinge mit einem ungestört durchgehenden Kreisbogen - die Begrenzungskontur des Querschnitts 9 nach beiden Flachseiten 14 des Ovals hin zu symmetrischen Spitzbögen 12 mit radiusgleichen Bogenflanken verändert. Die rechte und die linke Hälfte der kreisbogenförmigen Begrenzungskontur des Querschnitts der Mitnahmeschlinge stellen jeweils eine separate Torusfläche dar, wobei die zu der Torusfläche gehörende Symmetrie- bzw. Rotationsachse unter einem Winkel zur Ebene der Mitnahmeschlinge geneigt ist. Dieser Neigungswinkel entspricht etwa einem um den axialen Schwenkwinkel der Mitnahmeschlinge ge-genüber seiner Mittellage verminderten orthogonalen Winkel. Die Krümmungsmittelpunkte 13, 13', 13'' bzw. 13''' der Bogenflanken in den verschiedenen Querschnitten 9, 9', 9'' und 9''' (Figuren 6a bis 6d) weisen an allen Stellen des Ovalumfangs von Umfangsposition zu Umfangsposition untereinander den gleichen radialen Abstand a vom Mittelpunkt des am Ovalscheitelpunkt anliegenden Krümmungskreises auf. Wie aus der Abfolge von Querschnittsdarstellungen a, b, c und d gemäß Figur 6 gefolgert werden kann (dies liegt noch unterhalb der zeichnerisch möglichen Darstellungsgenauigkeit), liegt mit zunehmendem Umfangsabstand einer Umfangsposition vom Ovalscheitelpunkt die zugehörige Spitze des Spitzbogens 12 auf einem radial größeren Abstand vom Mittelpunkt des Scheitelpunktkrümmungskreises. Dieses wenn auch nur geringfügige Spiel zwischen Innenseite der - schwenkmäßig in neutraler Mittenstellung zu denkenden - Mitnahmeschlinge 8 und Umfangsrille 11 im Bereich der Auf- und Auslaufstellen der Mitnahmeschlinge ergibt sich zwangsläufig durch die oben beschriebene Formgebung der Innenseite der Mitnahmeschlingen. Andererseits ist dieses zu den Auf- und Auslaufstellen der Mitnahmeschlingen hin zunehmende Spiel durchaus willkommen. Dadurch können nämlich auf das Wellengelenk einwirkende Drehmomentenstöße, d.h. auf die Mitnahmeschlingen schlagartig einwirkende Zugbelastungen, elastisch aufgenommen und Spannungsspitzen abgebaut werden. Die Mitnahmeschlinge schmiegt sich unter Belastung zunehmend besser im Umschlingungsbereich an die Umfangsrille 11 elastisch an. Unter Maximalbelastung ist das erwähnte radiale Spiel schließlich ganz beseitigt und die Mitnahmeschlinge liegt im gesamten umschlungenen Umfangsbereich zumindest am Grund der Umfangsrille 11 an.

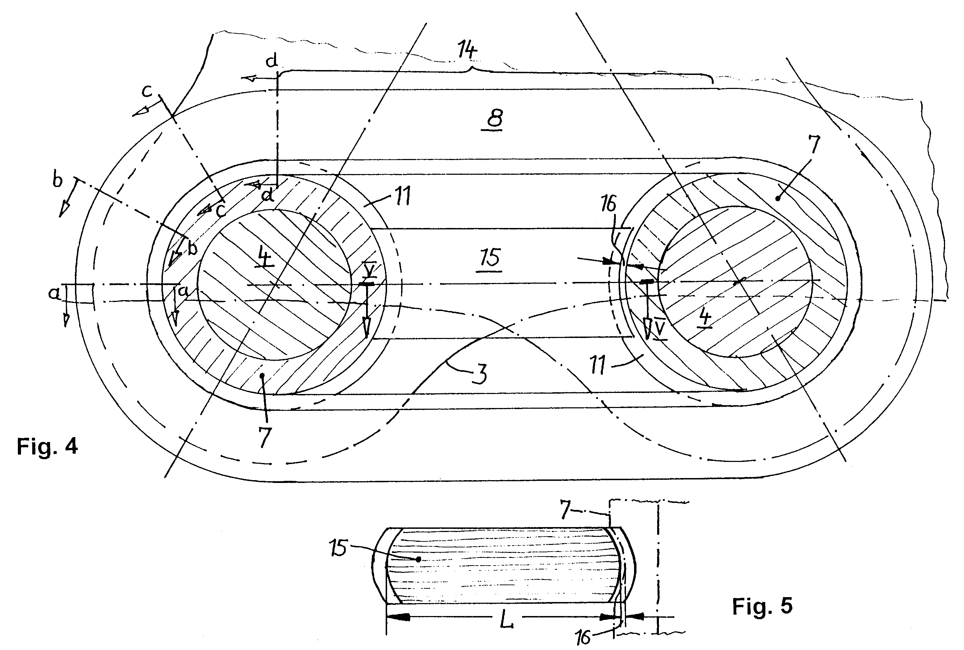

Bei dem in den Figuren 1 bis 6, insbesondere in Figur 4 dargestellten Ausführungsbeispiel des Wellengelenkes bzw. der Mitnahmeschlinge 8 ist die innenliegende spitzbogenförmige Begrenzungskontur des Querschnittes der Mitnahmeschlinge 8 auch über den gesamten Bereich der geradlinig ausgebildeten Flachseiten 14 des Ovales hinweg zumindest annähernd konstant ausgebildet. Die innenseitige spitzbogenförmige Querschittsform der Mitnahmeschlinge am Auslauf von der einen Umfangsrille wird konstant bis zum Auflauf auf die ander Umfansrille beibehalten. Diese innenseitig konstante Querschittsform der Flachseite 14 ist aus Gründen der Wickeltechnik der Mitnahmeschlingen sowohl fertigungstechnisch als auch aus Festigkeitsgründen optimal. Die Mitnahmeschlingen 8 bestehen nämlich optimalerweise aus endlosfaser-verstärktem Kunststoff, wobei eine gewickelte Einzelfaser oder ein wenige Einzelfasern umfassender, gewickelter Endlosstrang der Fertigkontur der Mitnahmeschlinge 8 folgt. Die Fasern verlaufen in den Ovalflachseiten auch im Bereich der Innenseite geradlinig von der einen Umkehrschleife zur anderen. Aus dem gleichen Grunde ist auch der Flächeninhalt des Querschnittes der Mitnahmeschlinge über seinen gesamten Umfang hinweg, und zwar sowohl im Bereich der kreisbogenförmigen Konturierung als auch im Bereich der Ovalflachseiten annähernd konstant ausgebildet. Was die Querschnittsform der Mitnahmeschlinge 8 anlangt, so ist diese bei den gezeigten Ausführungsbeispielen an allen Umfangspositionen annähernd gleich und annähernd quadratisch ausgebildet. Es ist in dem Ausführungsbeispiel nach den Figuren 1 bis 6 mit in eine Umfangsrille ein-greifenden innenseitig konvexen Mitnahmeschlinge aus Gründen einer kompakten Bauweise der Mitnahmeschlingen zweckmäßig, eine Querschittsform zu wählen, die in ein Rechteck einbeschreibbar ist, dessen Seitenlängen sich höchstens um etwa 20% voneinander unterscheiden. Durch die Kompaktform des Querschnittes wird ein Kompromiß zwischen optimaler Bandform des Schlingenquerschnittes und geringem Axialhub in den Gleitflächen geschaffen.

Es wurde bereits erwähnt, daß die Mitnahmeschlingen 8 während des Rotierens des Wellengelenkes in abgewinkeltem Zustand bei jeder Umdrehung eine vollständige Pendelbewegung in axialer Richtung ausführen, wobei die kreisbogenförmig konturierte Innenseite der Mitnahmeschlinge in der Umfangsrille 11 axial gleitet. Um bei dieser Gleitbewegung einen Verschleiß möglichst zu vermeiden, sind in den Faserwerkstoff und/oder den MatrixKunststoff der Mitnahmeschlingen 8 Partikel eines Festschmierstoffes eingemischt.

Um einerseits bei der erwähnten Pendel- und Gleitbewegung den Gleithub möglichst gering zu halten, um andererseits die zu übertragende Kraft auf eine möglichst große Fläche übertragen zu können (zur Erzielung einer geringen Flächenpressung), sollte der Krümmungsradius r der innenliegenden Begrenzungskontur des Querschnittes der Mitnahmeschlinge nicht zu groß und nicht zu klein sein. Eine flach gekrümmte Innenseite ergibt einen großen Gleithub und ein kleiner Krümmungsradius ergibt eine hohe Flächenpressung, weil da die steil liegenden Ränder fast nichts mehr zur Kraftübertragung mit beitragen. Bei einer brauchbaren Kompromißlösung entspricht der Krümmungsradius 50 bis 150 % der axialen Breite B der Mitnahmeschlingen, vorzugsweise etwa 65 bis 100 %. Beim dargestellten Ausführungsbeispiel entspricht der Radius r etwa 75% der Breite B.

Um die Mitnahmeschlingen noch besser im Hinblick auf eine stoßartige Belastung zu optimieren, ist es gemäß der Darstellung in Figur 7 zweckmäßig, die Flachseiten 14' des Ovals der Mitnahmeschlinge 8' gekrümmt auszubilden. Dadurch können sich die gekrümmten Flachseiten bei stoßartiger Zugbelastung der Mitnahmeschlinge elastisch in Richtung geradlinig strecken und zeitlich die Spannungsspitze abbauen. An sich wäre es auch denkbar, die Flachseiten ins innere des Ovals hinein zu wölben, was diese Wirkung ebenfalls hervorbrächte. Aus Gründen einer besseren Herstellbarkeit der Mitnahmeschlingen aus einem endlos-faserverstärktem Kunststoff im Wege der Wickeltechnik ist es jedoch zweckmäßiger, wenn die gekrümmten Flachseiten 14' des Ovals nach außen konvex gekrümmt sind.

Nicht nur die Mitnahmeschlingen 8 bzw. 8' unterliegen einer tribologischen Beanspruchung, sonder auch die Steckhülsen 7. Um auch bei ihnen einen Verschleiß zu minimieren, werden sie aus einem reibungsarmen und verschleißbeständigen Werkstoff, vorzugsweise aus einer Keramik hergestellt. Dabei kann es von Vorteil sein, wenn in den Keramikwerkstoff der Steckhülse Partikel eines Festschmierstoffes eingemischt sind.

Obwohl insgesamt sechs Mitnahmeschlingen 8 in dem Wellengelenk angebracht sind, trägt in jeder Drehrichtung jeweils nur die halbe Anzahl von Mitnahmeschlingen zur Drehmomentübertragung bei. Um eine Entlastung der Mitnahmeschlingen zu bewirken, ist im Inneren einer jeden Mitnahmeschlinge 8 zusätzlich noch je ein geradliniger Druckstab 15 angebracht, der mit seinen Stirnseiten ebenfalls in die Umfangsrille der Steckhülsen kraftübertragend eingreift. Der Druckstab ist zu diesem Zweck an seinen beiden Stirnseiten mit einer Sattelfläche versehen, die sowohl bezüglich des Querschnittes als auch bezüglich des Umfangsverlaufes der Umfangsrille der Steckhülsen angepaßt ist. Der Druckstab greift mit seinen beiden Enden in die Umfangsrille 11 je einer angrenzenden Steckhülse 7 ein. Bei Drehmomentbelastung des Wellengelenkes in einer bestimmten Drehrichtung nehmen dann jede zweite Mitnahmeschlinge und die drei im Inneren der unbelasteten Mitnahmeschlingen angeordneten Druckstäbe teil. Durch diese Verteilung der Last auf eine doppelt so hohe Anzahl von Kraftübertragungselementen wie im Stand der Technik kommt es zu einer deutlichen Entlastung der Kraftübertragungselemente im Wellengelenk.

Unter normalen Lastbedingungen des Wellengelenkes sind die drei Mitnahmeschlingen einer Drehrichtung ohne weiteres alleine in der Lage, das auftretende Drehmoment zu Obertragen, so daß im Normalfall die Druckstäbe nicht belastet zu werden brauchen. Es ist aus Gründen einer statischen Unbestimmtheit im übrigen nicht möglich, ein Drehmoment auf sechs Kraftübertragungselemente eines Kreises gleichmäßig zu verteilen, sondern nur auf drei Elemente. Es ist deshalb zweckmäßig, die Länge L der Druckstäbe 15 so zu bemessen, daß sie den Lichtraum zwischen zwei benachbarten Steckhülsen 7 nur mit Spiel 16 (Figur 4) ausfüllen. Dadurch kommen die Druckstäbe erst nach einer gewissen belastungsbedingt elastischen Längung der Mitnahmeschlingen zum Tragen und nehmen erst dann ebenfalls Last auf. Demgemäß ist das Spiel 16 der Druckstäbe zwischen zwei benachbarten Steckhülsen so groß bemessen, wie die lastbedingte Längung der Mitnahmeschlingen unter einer zwar sehr hohen aber auf Dauer tolerierbaren Zugbeanspruchung. Erst wenn die Drehmomentbelastung zu einer höheren Zugbeanspruchung der Mitnahmeschlingen führen und diese noch mehr dehnen würde, legen sich auch die Stirnenden der Druckstäbe kraftübertragend in den Grund der Umfangsrillen 11 der Steckhülsen an.

Auch die Druckstäbe 15 sind aus langfaser-verstärktem Kunststoff gebildet, wobei die Langfasern alle parallel zueinander und zur Längsachse der Druckstäbe liegen und unterbrechungsfrei durchlaufen. Nachdem auch die Druckstäbe beim Umlauf des Wellengelenkes im Abgewinkelten Zustand - so wie die Mitnahmeschlingen auch - mit ihren Stirnenden axiale Pendelbewegungen in der Umfangsrille vollführen, ist es zur tribologischen Verbesserung dieser Gleitbewegung zweckmäßig, in den Faserwerkstoff und/oder den Matrix-Kunststoff der Druckstäbe ebenfalls Partikel eines Festschmierstoffes einzumischen.

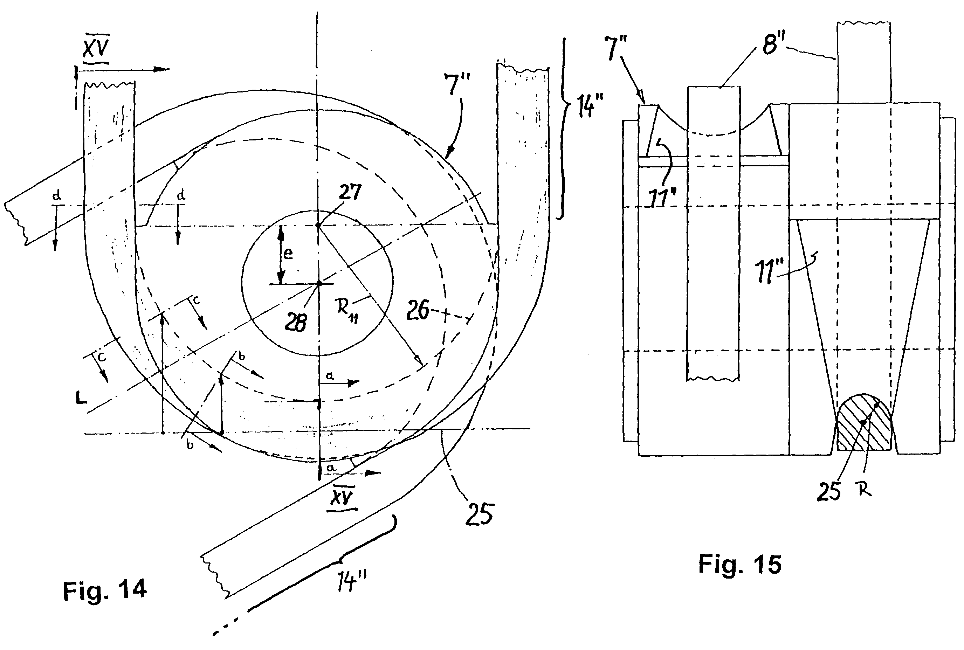

An dieser Stelle sei auf das Ausführungsbeispiel nach den Figuren 14 bis 16 eingegangen, welches eine Modifikation des Gelenkringes nach den Figuren 1 bis 6, insbesondere Figur 4 darstellt. Die Gemeinsamkeit dieser beiden Ausführungsarten besteht darin, daß die Mitnahmeschlingen 8 bzw. 8'' auf den Steckhülsen in einer im Querschnitt gerundeten Umfangsrille 11 bzw. 11'' geführt sind und die Mitnahmeschlingen im Umschlingungsbereich innenseitig konvex gerundet sind. Die beiden angesprochenen Ausführungsbeispiele unterscheiden sich jedoch durch die Art und Weise, wie in der Umfangsrille Raum für ein verzwängungsfreies axiales Pendeln der Mitnahmeschlinge innerhalb der Umfangsrille geschaffen ist.

Ein gewisser Nachteil des Gelenkringes nach Figur 4 besteht darin, daß der Querschnitt der Mitnahmeschlinge 8 in Radialrichtung immer noch relativ hoch ist, wodurch die optimale Flachriemenform für Umschlingungsglieder nur recht unvollkommen angenähert ist, wie die Figurenfolge 6a bis 6d erkennen läßt. Beim Ausführungsbeispiel nach den Figuren 14 bis 16 ist eine flachere Querschnittsform der Mitnahmeschlinge 8'' zumindest im Bereich der Flachseite des Ovals und in den angrenzenden Bereichen der Umschlingung erreicht, nämlich eine annähernd quadratische Querschnittsform, wie vor allem die Figuren 16c und 16 d zeigen.

Der für die Pendelbewegung erforderliche Freiraum innerhalb der Umfangsrille 11'' ist beim Ausführungsbeispiel nach den Figuren 14 bis 16 dadurch geschaffen, daß die Umfangsrille über den Umschlingungsbereich von der Mitte zu den Enden hin divergiert. Am Scheitelpunkt der Umschlingung (Figur 16a) beträgt der Krümmungsradius R des Rillengrundes und auch der der entsprechenden Querschnittskontur der Mitnahmeschlinge 8'' nur der halben axialen Breite B'' der Mitnahmeschlinge 8''. An den Enden der Umschlingung zu den Flachseiten des Ovals hin (Figur 16d) ist die Querschnittskontur des Rillengrundes und die der Mitnahmeschlinge 8'' geradlinig, also nicht mehr gekrümmt. Zwischen diesen beiden Positionen ändert sich die Krümmung kontinuierlich, wobei die Querschnittsfläche der Mitnahmeschlinge über den Umfang hinweg konstant bleibt.

Abweichend von einer zum Mittelpunkt 28 der Steckhülse 7'' rotationssymmetrischen Form der Umfangsrille divergiert diese also von der Mitte des Umschlingungsbereiches zu den Flachseiten 14'' des Ovals der Mitnahmeschlinge 8'' hin. Der Rillengrund und der Querschnitt der Mitnahmeschlinge 8'' sind in der Mitte des Umschlingungsbereiches halbkreisförmig mit einem der halben Schlingenbreite - Maß B'' - entsprechenden Krümmungsradius R konturiert. Die radial innenliegende Begrenzungskontur des Querschnittes der Umfangsrille 11'' und der Mitnahmeschlinge 8'' laufen bei kontinuierlich abnehmender Krümmung zu den Flachseiten 14'' des Ovals hin flach aus.

Die Mitnahmeschlinge 8'' pendelt relativ zu der Steckhülse in Axialrichtung um die in Figur 14 strichpunktiert eingezeichnete Schwenkachse 25, die ihrer Lage nach dem Radiusmittelpunkt des Krümmungsradius R der Querschnittskontur gemäß Figur 16a (Schnitt a-a) der Mitnahmeschlinge 8'' entspricht. Jeder Punkt der Umfangsrille 11'' der Steckhülse 7'' liegt auf einer zu dieser Achse 25 rotationssymmetrischen Oberfläche. Diese Rotationsfläche wird beschrieben durch eine Rotation der in Figur 14 strichliert dargestellten meridianen Innenlinie 26 um die genannte Schwenkachse 25. Die radial innenliegende Begrenzungsfläche der Umfangsrille 11'' und die der Mitnahmeschlinge 8'' sind gewissermaßen durch einen Streifen aus einer Rotationsfläche gebildet, deren Rotationsachse lagemäßig mit der Schwenkachse 25 der Mitnahmeschlinge 8'' gegenüber der Steckhülse 7'' übereinstimmt und deren Erzeugende die halbkreisförmige meridiane Innenlinie 26 der Umfangsrille 11'' ist.

Die meridiane Innenlinie 26 der Umfangsrille 11'' ihrerseits ist beim dargestellten Ausführungsbeispiel ein Kreisbogen mit dem Radius R₁₁ um den Mittelpunkt 27, der aus Platz- und Stabilisierungsgründen um das Maß e in Richtung der Mitnahmeschlinge 8'' gegenüber der Mitte 28 der Steckhülse 7'' exzentrisch angeordnet ist. Der Mittelpunkt 27 der halbkreisförmigen meridianen Innenlinie 26 der Umfangsrille 11'' ist gegenüber dem Mittelpunkt der Steckhülse 7'' parallel zu den Flachseiten des Ovals und in Richtung zu deren Inneren hin exzentrisch Maß e angeordnet. Nachdem die Umfangsrille 11'' nicht in Bezug auf den Mittelpunkt 28 rotationssymmetrisch ausgebildet bzw. an der Steckhülse 7'' angeordnet ist, sondern vielmehr einer bestimmten Umfangsposition zugeordnet ist, muß die Steckhülse 7'' in ihrer Umfangslage in dieser bestimmten Lage relativ zu den Mitnahmeschlingen 8'' stabilisiert werden. Auch hierzu dient die erwähnte Exzentrizität von Krümmungsmittelpunkt 27 der Umfangsrille 11'' und Mittelpunkt 28 der Steckhülse 7''. Aufgrund der Exzentrizität stellt sich nämlich die Steckhülse 7'' nach einer etwaigen Störung der Soll-Lage von Mitnahmeschlinge und Steckhülse aufgrund des in der Mitnahmeschlinge wirkenden Zuges selbsttätig immer wieder in die dargestellte Ralativlage ein, bei der die Exzentrizität in Richtung zur Mitnahmeschlinge weist.

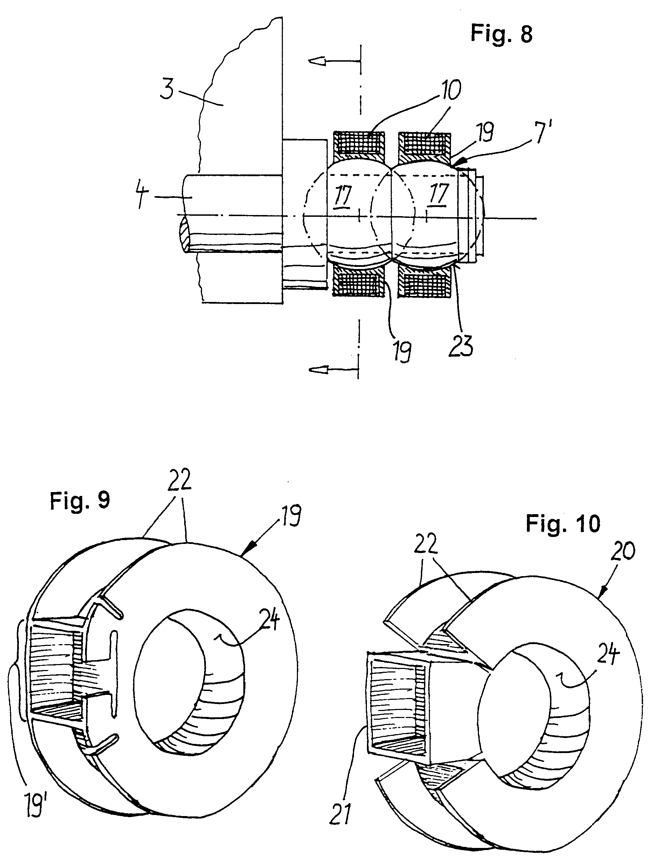

Nachfolgend sei noch auf die anderen Ausführungsbeispiele, und zwar zunächst auf das nach den Figuren 8 bis 11 eingegangen, bei dem eine im Querschnitt - von innen gesehen - konkav gestaltete kreisbogenförmige Kontaktfläche 24 an einem Gleitelement 19 bzw. 20 vorgesehen ist, wogegen auf der Steckhülse 7' ein konvexer Umfangswulst 17 angebracht ist. Bei dem Ausführungsbeispiel nach den Figuren 8 bis 11 ist die Mitnahmeschlinge mittelbar unter Zwischenschaltung von Gleitelementen 19 bzw. 20 auf der Steckhülse gelagert, was den Vorteil hat, daß der Werkstoff der Gleitelemente nach tribologischen Gesichtspunkten optimal ausgewählt bzw. festgelegt werden kann. An dieser Stelle sei ein weiterer Vorteil der Verwendung von Gleitelementen erwähnt: Bei einer solchen Anordnung kann nämlich in fertigungsgünstiger Weise die Kontaktseite zwischen Gleitelement 19, 20 und Mitnahmeschlinge 10 zylindrisch gestaltet sein. Die Mitnahmeschlingen können dann von einem gewickelten Ovalrohr abgeschnitten werden

Gelenkringe mit einer konvexen Kontaktflächenform zwischen Mitnahmeschlingen und Steckhülse entspechend den Ausführungbeispielen der der Figuren 8 bis 11 und der Figuren 12 und 13 bieten den besonderen Vorteil, nicht nur ein zwangfreies axiales Pendeln zu ermöglichen, sondern auch bei einem gegenseitigen Verschränken der benachbarten Mitnahmezapfen ein Verdrillen der Mitnahmeschlingen gänzlich zu vermeiden. Dazu ist es eforderlich, den Krümmungsradius in Meridian- und in Umfangsrichtung untereinander gleich zu bemessen, so daß die Kontaktflächen Teile einer Kugelfläche 23, 24, 24' darstellen. Die Kugelgestalt der Gleitflächen bedingt zwar einen relativ großen Axialhub beim Pendeln der Mitnahmeschlingen auf den Umfangswülsten, jedoch wird durch eine breitere Kontaktfläche zugleich auch die Flächenpressung im Gleitflächenpaar reduziert. Ein weiterer Vorteil der Kugelform und der breiten Gleitfläche liegt darin, daß der Querschnitt der Mitnahmeschlinge 10 bzw. 18 breit und flach gestaltet werden kann, was im Umschlingungsbereich einen geringen, krümmungsbedingten Spannungsanstieg zu den Außenlagen hin bedeutet. Die mittlere axiale Erstreckung B' des Querschnittes der Mitnahmeschlinge 10, 18 kann größer als deren radial gemessene Wandstärke s bemessen werden.

Bei Einsatz von Gleitelemente 19, 20 sind diese zweckmäßigerweise an beiden Stirnseiten mit Führungsborden 22 zur Aufnahme der Mitnahmeschlinge (10) dazwischen versehen, wodurch die Relativlage zwischen Gleitelement und Mitnahmeschlinge stabilisiert wird.

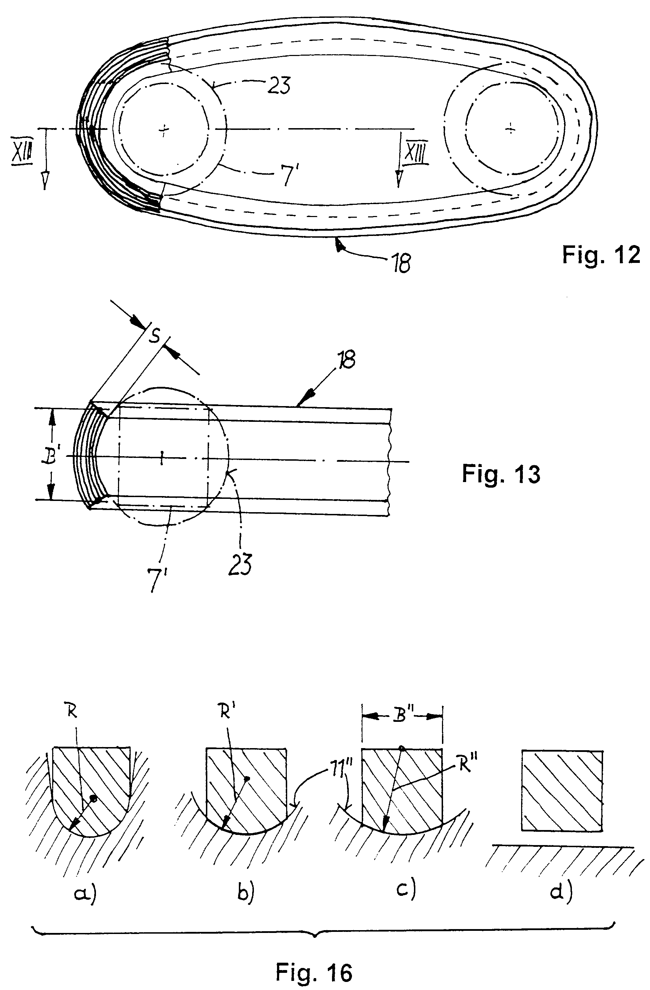

Ein weiterer Vorteil der Kugelform der Kontaktflächen liegt darin, daß die bei Zugbelastung von der Kugelfläche auf die zwischengefügten Gleitelemente 19, 20 oder auf die unmittelbar aufliegende Mitnahmeschlinge 18 nach Figur 12, 13 ausgeübte Spreizwirkung relativ gering ist, weil die "Keilflächen" der Kugel sehr flach zueinander geneigt liegen. Die Gleitelemente 19, 20 können bei entsprechender Gestaltung diese Spreizwirkung ohne weiteres übernehmen. Die nur in Längsrichtung faserverstärten Mitnahmeschlingen sind in Querrichtung nicht so hoch belastbar und könnten bei unmittelbarer Auflage auf der Kugelfläche (Figur 12 und 13) u.U. bei extremer Zugbelastung und entsprechend hoher Spreizwirkung gespalten werden. Deshalb ist es zweckmäßig, wenn im Falle von unmittelbar auf dem Umfangswulst gleitender Mitnahmeschlinge 18 in diese Querfasern zur Erhöhung der Querzugfestigkeit eingearbeitet sind.

Bei Verwendung von kugelförmigen Kontaktflächen zwischen Steckhülse und Gleitelement bzw. Mitnahmeschlinge ist es wegen der flacheren Wölbung der Kugeloberfläche schwieriger, einen Druckstab 15' auf der Kugeloberfläche lagesicher zu zentrieren, insbesondere dann, wenn - wie zu empfehlen - der Druckstab mit Spiel zwischen den Mitnahmezapfen gehalten ist. Deshalb ist es zumindest bei nach außen konvexen, insbesondere kugelförmigen Kontaktflächen zweckmäßig, die Druckstäbe mittelbar unter Verwendung von Gleitschuhen 19' bzw. 21 aus einem gleitfähigen Werkstoff, insbesondere aus Kunststoff auf die Umfangswülste 17 aufzusetzen. Die Druckstäbe 15' sind an den Stirnseiten gradlinig und rechtwinklig auf definierte Länge beschnitten und mit ihren Enden in die Gleitschuhe 19', 21 eingesteckt. Die Gleitschuhe bilden gemeinsam mit den Druckstäben die Funktionslänge der Druckstäbe.

Beim Ausführungsbeispiel des Gleitelementes 19 nach Figur 9 ist der Gleitschuh 19' für den Druckstab 15' in das Gleitelement 19 baulich zu einem ringförmig geschlossenen Bauteil integriert. Die Mitnahmeschlinge 10 wird zunächst außen auf die beiden Gloitelemente jeweils zwischen die Führungsborde 22 aufgelegt, womit der gegenseitige Abstand der beiden gegenüberliegenden Gleitelemente festgelegt ist. Die Gleitelemente sind zweckmäßigerweise zuvor auf die kugelförmigen Umfangswulste 17 der Steckhülsen axial aufgeklipst worden. Um die Enden des Druckstabes auch dann noch in die Gleitschuhe einbringen zu können, ist eine axial freiliegende Wandung des Gleitschuhes geschlitzt ausgebildet, so daß unter elastischem Aufbiegen dieser Wandung das Druckstabende axial in den Gleitschuh eingebracht werden kann.

Bei der Ausgestaltung des Gleitlelemtes 20 nach Figur 10 ist dieses C-förmig ausgebildet und der Gleitschuh 21 für den Druckstab 15' ist als ein demgegenüber gesondertes Bauteil gestaltet. Die Mitnahmeschlinge mit den beiden zugehörigen Gleitelementen 20 und steckhülsen einerseits und der Druckstab mit den beiden Gleitschuhen 21 andererseits können jeweils für sich vormontiert und die zuletzt genannte Vormontage-Einheiten dann axial zwischen die Umfangswulste 17 der Steckhülse eingeschoben werden, wobei das beabsichtigte, weiter oben erwähnte Spiel 16 diesen Einklipsvorgang begünstigt.

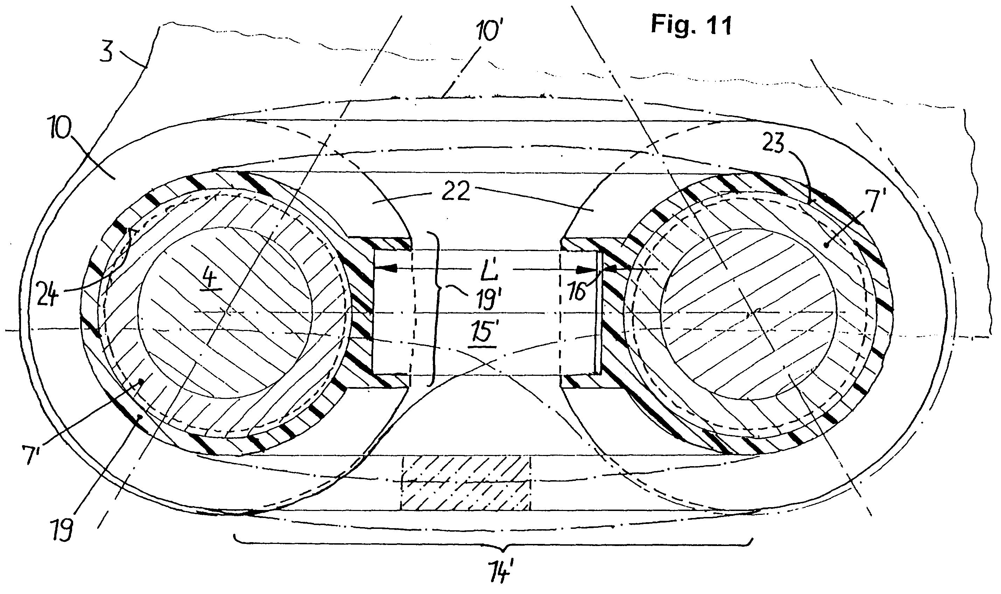

Bei den Ausführungsbeispielen mit kugelförmigem Umfangswulst 17 bzw. 23 lassen sich der Flachriemenform sehr gut angenäherte Querschnittsformen der Mitnahmeschlingen realisieren. Bei diesen Mitnahmeschlingen kann die Längsseite des Ovals gewölbt ausgebildet werden, wie dies in Figur 11 für die Mitnahmeschlinge 10' strichpunktiert angedeutet ist und wie es bei der Mitnahmeschlinge 18 nach Figur 12 in vollen Linien gezeichnet ist. Durch diese Wölbung der Längsseiten kann eine Längselastizität der Mitnahmeschlinge erzielt werden, allerdings nur, wenn die Längsseiten eine gewisse Eigensteifigkeit auffweisen. Ist der Querschnitt der Mitnahmeschlingen - was an sich erwünscht ist - sehr flach und das Flächenträgheitsmoment gegen Biegung demzufolge nur gering, so ist die Federhärte der Mitnahmeschlinge 10' oder 18 gegen Längung ebenfalls nur gering. Zur Realisierung einer größeren elastischen Härte derartiger, von hause aus weicher Mitnahmeschlingen kann es zweckmäßig sein, in das Innere der Mitnahmeschlingen einen Füllkörper aus Weichgummi oder elastischem Schaum Einzulegen, der den Raum zwischen den beiden gewölbten Längsseiten des Ovals ausfüllt. Bei Zugbelastung der Mitnahmeschlinge muß dieser elastische Füllkörper durch die nach innen wandernden, sich der Strecklage nähernden Längsseiten zusammengedrückt werden. Dadurch wird der elastische Widerstand der Mitnahmeschlinge gegen Längung erhöht. Je nach werkstoffbedingter und/oder formbedingter elastischer Härte des Füllkörpers gegen Zusammendrücken kann eine bestimmte elastische Härte der Mitnahmeschlinge eingestellt werden.

Zum Schutz der Gleitstellen vor Schmutzzutritt und zum Zusammenhalten der Einzelteile des Gelenkringes 6 zu einem in sich geschlossenen und handhabbaren Werkstück sind alle Teile des Gelenkringes in eine gummielastische Masse geringer Härte eingebettet und von ihr vollständig umschlossen. Alternativ dazu ist auch das Umspritzen der Einzelteile des Gelenkringes mit einem weichen und elastischen Kunststoff möglich.

## Patentansprüche

1. Wellengelenk zum drehsteifen aber innerhalb gewisser Grenzen axial und/oder winkelbeweglichen Verbinden zweier Wellen miteinander,
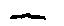 mit an den Enden der beiden durch das Gelenk verbundenen Wellen jeweils angeordneten Flansche mit mehreren, vorzugsweise drei in Richtung zum Wellengelenk hin axial abragenden Mitnahmezapfen, wobei die insgesamt vorgesehenen, vorzugsweise sechs, gegenseitig auf Lücke angeordnete Mitnahmezapfen gleichmäßig am Umfang eines gemeinsamen Teilkreises angeordnet sind,
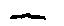 mit einem die Mitnahmezapfen untereinander drehstarr verbindenden flexiblen, regelmäßig polygonartigen, vorzugsweise sechseckigen, in den Eckpunkten mit Steckhülsen versehenen Gelenkring, der zwischen den Steckhülsen in sich axial elastische verformbar ist,
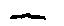 wobei der Gelenkring seinerseits mehrteilig durch einen Kranz mehrerer, jeweils zwei benachbarte Steckhülsen umschlingender, in sich endloser, ovaler Mitnahmeschlingen nach Art einzelner Kettenglieder gebildet ist, die auf den Steckhülsen jeweils radial verschwenkbar sind, so daß der Gelenkring in seiner Form gelenkig veränderbar ist,
**dadurch gekennzeichnet,**
daß die ovalen Mitnahmeschlingen (8, 10,18) mittelbar oder unmittelbar auf den Mitnahmezapfen (4) aufgrund eines Paares von einander entsprechenden, in einem Meridianschnitt kreisbogenförmig konturierter, gegenseitiger Berührungsfläche an der Steckhülse (7, 7') bzw. an der Mitnahmeschlinge (8, 10,18) axial gleitend schwenkbar gelagert sind.

2. Wellengelenk nach Anspruch 1,
**dadurch gekennzeichnet**,
daß die ovalen Mitnahmeschlingen (8, 10,18) zumindest im Bereich der Berührung mit der Steckhülsen (7, 7') und zumindest auf der der Steckhülse (7, 7') zugekehrten Innenseite entweder unmittelbar selber kreisbogenförmig - konvex oder konkav - konturiert sind oder innenseitig ein Gleitelement (19, 20) aufweisen, welches im Meridianschnitt kreisbogenförmig konturiert ist, wobei die Mitnahmeschlingen (8, 10,18) oder das Gleitelement (19, 20) in eine im Querschnitt zu der schlingen- oder gleitelementseitigen Querschnittsform negativ entsprechend kreisbogenförmig gestaltete Umfangsrille (11) bzw. Umfangswulst (17) auf der Außenseite der Steckhülse (7, 7') eingreifen bzw. übergreifen, so daß die Mitnahmeschlingen (8, 10,18) in der jeweils zugehörigen Umfangsrille (11) bzw. auf dem Umfangswulst (17) unter axialer Gleitbewegung axial verschwenkbar sind.

3. Wellengelenk nach Anspruch 2,
**dadurch gekennzeichnet**,
daß bei einer im Querschnitt - von innen gesehen - konkav gestalteten kreisbogenförmigen Kontaktfläche (24, 24') am Gleitelement (19, 20) oder an der Mitnahmeschlinge (18) und einem Umfangswulst (17) auf der Steckhülse (7') der Radius der Querschnittsform so gewählt ist, daß die Krümmung in Meridian- und in Umfangsrichtung untereinander gleich ist und die Kontaktflächen Teil einer Kugelfläche (23, 24, 24') darstellen.

4. Wellengelenk nach Anspruch 2,
**dadurch gekennzeichnet**,
daß bei einer im Querschnitt konvex gestalteten kreisbogenförmigen Begrenzungskontur des Querschnitts der Mitnahmeschlinge (8) und einer Umfangsrille (11) auf der Steckhülse die kreisbogenförmige Begrenzungskontur des Querschnitts der Mitnahmeschlinge (8) über deren Umfang hinweg kontinuierlich verändert ist, und zwar ausgehend vom Scheitelpunkt der ovalen Mitnahmeschlinge (8) mit einem ungestört durchgehenden Kreisbogen nach beiden Flachseiten (14) des Ovals hin zu symmetrischen Spitzbögen (12) mit radiusgleichen Bogenflanken.

5. Wellengelenk nach Anspruch 4,
**dadurch gekennzeichnet**,
daß die Krümmungsmittelpunkte (13, 13', 13'', 13''') der Bogenflanken an allen Stellen des Ovalumfangs von Umfangsposition zu Umfangsposition untereinander den gleichen radialen Abstand (a) vom Mittelpunkt des am Ovalscheitelpunkt anliegenden Krümmungskreises aufweisen, so daß mit zunehmendem Umfangsabstand einer Umfangsposition vom Ovalscheitelpunkt die Spitze des Spitzbogens (12) einen zunehmenden radialen Abstand vom Mittelpunkt des Scheitelpunktkrümmungskreises aufweist

6. Wellengelenk nach Anspruch 2,
**dadurch gekennzeichnet**,
daß die innenliegende Begrenzungskontur des Querschnittes der Mitnahmeschlinge (8) über den gesamten Bereich der geradlinig ausgebildeten Flachseiten (14) des Ovales hinweg zumindest annähernd konstant spitzbogenförmig ausgebildet ist.

7. Wellengelenk nach Anspruch 4,
**dadurch gekennzeichnet**,
daß der Krümmungsradius (r) der innenliegende Begrenzungskontur des Querschnittes der Mitnahmeschlinge (8) 50 bis 150 % der axialen Breite (B) der Mitnahmeschlingen (8), vorzugsweise etwa 80 bis 120 % entspricht.

8. Wellengelenk nach Anspruch 2,
**dadurch gekennzeichnet**,
daß abweichend von einer zum Mittelpunkt (28) der Steckhülse (7'') rotationssymmetrischen Form der Umfangsrille diese (11'') in Form einer von der Mitte des Umschlingungsbereiches (Schnitt a-a in Figur 14) zu den Flachseiten (14'') des Ovals der Mitnahmeschlinge (8'') hin divergierenden Umfangsrille (11'') ausgebildet ist, wobei der Rillengrund und der Querschnitt der Mitnahmeschlinge (8'') in der Mitte des Umschlingungsbereiches halbkreisförmig mit einem der halben Schlingenbreite (Maß B'') entsprechenden Krümmungsradius (R) konturiert sind und die radial innenliegende Begrenzungskontur des Querschnittes der Umfangsrille (11'') und der Mitnahmeschlinge (8'') bei kontinuierlicher Abnahme der Krümmung zu den Flachseiten (14'') des Ovals hin flach auslaufen.

9. Wellengelenk nach Anspruch 8,
**dadurch gekennzeichnet**,
daß der Mittelpunkt (27) der halbkreisförmigen meridianen Innenlinie (26) der Umfangsrille (11'') gegenüber dem Mittelpunkt der Steckhülse (7'') Parallel den Flachseiten des Ovals und in Richtung zu deren Inneren hin exzentrisch (Maß e) angeordnet ist.

10. Wellengelenk nach Anspruch 8,
**dadurch gekennzeichnet**,
daß die radial innenliegende Begrenzungsfläche der Umfangsrille (11'') und die der Mitnahmeschlinge (8'') einem Streifen aus einer Rotationsfläche entspricht, deren Rotationsachse lagemäßig mit der Schwenkachse (25) der Mitnahmeschlinge (8'') gegenüber der Steckhülse (7'') übereinstimmt und deren Erzeugende die halbkreisförmige meridiane Innenlinie (26) der Umfangsrille (11'') ist.

11. Wellengelenk nach Anspruch 2,
**dadurch gekennzeichnet**,
daß der Flächeninhalt des Querschnittes der Mitnahmeschlinge über seinen gesamten Umfang hinweg, und zwar auch im Bereich der kreisbogenförmigen Konturierung, konstant ist

12. Wellengelenk nach Anspruch 2,
**dadurch gekennzeichnet**,
daß die Mitnahmeschlingen (8, 10, 18) aus endlosfaser-verstärktem Kunststoff bestehen, wobei eine gewickelte Einzelfaser oder ein wenige Einzelfasern umfassender, gewickelter Endlosstrang der Fertigkontur der Mitnahmeschlinge (8) folgt.

13. Wellengelenk nach Anspruch 12,
**dadurch gekennzeichnet**,
daß in den Faserwerkstoff und/oder den Matrix-Kunststoff der Mitnahmeschlingen (8, 10, 18) Partikel eines Festschmierstoffes eingemischt sind.

14. Wellengelenk nach Anspruch 2,
**dadurch gekennzeichnet**,
daß bei auf einem Umfangswulst (17) zumindest mittelbar gleitender Mitnahmeschlinge (10, 18) die mittlere axiale Erstreckung (b') des Querschnittes der Mitnahmeschlinge (10, 18) größer ist als die deren radial gemessene Wandstärke (s).

15. Wellengelenk nach Anspruch 14,
**dadurch gekennzeichnet**,
daß bei unmittelbar auf dem Umfangswulst gleitender Mitnahmeschlinge (18) in diese Querfasern zur Erhöhung der Querzugfestigkeit eingearbeitet sind.

16. Wellengelenk nach Anspruch 2,
**dadurch gekennzeichnet**,
daß bei mittelbar oder unmittelbar in einer Umfangsrille gleitender Mitnahmeschlinge (8) deren Querschnitt an allen Umfangspositionen sich in ein annähernd quadratisches Rechteck einbeschreiben läßt, dessen Seitenlängenverhältnis im Bereich 10:8 bis 8:10, vorzugsweise nahe bei 1:1 liegt.

17. Wellengelenk nach Anspruch 2,
**dadurch gekennzeichnet**,
daß bei einem mittelbaren Umschlingen der Mitnahmeschlinge (10) um die Steckhülse (7') unter Zwischenlage eines in die Umfangsrille eingreifenden oder den Umfangswulst (17) übergreifenden Gleitelementes (19, 20) die Kontaktseite zwischen Gleitelement (19, 20) und Mitnahmeschlinge (10) zylindrisch gestaltet ist.

18. Wellengelenk nach Anspruch 17,
**dadurch gekennzeichnet**,
daß bei einem mittelbaren Umschlingen der Mitnahmeschlinge (10) um die Steckhülse (7') unter Zwischenlage eines in die Umfangsrille eingreifenden oder den Umfangswulst (17) übergreifenden Gleitelementes (19, 20) diese an beiden Stirnseiten mit Führungsborden (22) zur Aufnahme der Mitnahmeschlinge (10) dazwischen versehen.

19. Wellengelenk nach Anspruch 2,
**dadurch gekennzeichnet**,
daß die Flachseiten (14') der ovalen Mitnahmeschlinge (8') gekrümmt verlaufen.

20. Wellengelenk nach Anspruch 19,
**dadurch gekennzeichnet**,
daß die gekrümmten Flachseiten (14') des Ovals nach außen konvex gekrümmt sind.

21. Wellengelenk nach Anspruch 2,
**dadurch gekennzeichnet**,
daß die Steckhülse (7) aus einem reibungsarmen und verschleißbeständigen Werkstoff, vorzugsweise aus einer Keramik besteht.

22. Wellengelenk nach Anspruch 21,
**dadurch gekennzeichnet**,
daß in den Keramikwerkstoff der Steckhülse (7) Partikel eines Festschmierstoffes eingemischt sind.

23. Wellengelenk nach Anspruch 2,
**dadurch gekennzeichnet**,
daß im Inneren der ovalen Mitnahmeschlinge (8) jeweils ein geradliniger Druckstab (15) angebracht ist, der an seinen beiden Stirnenden zumindest mittelbar mit einer so geformten Fläche versehen ist, die sowohl bezüglich des Querschnittes als auch bezüglich des Umfangsverlaufes der Umfangsrille (11) bzw. dem Umfangswulst der Steckhülsen angepaßt ist, wobei der Druckstab (15) beiderends in die Umfangsrille (11) bzw. dem Umfangswulst je einer angrenzenden Steckhülse (7) eingreift bzw. übergreift.

24. Wellengelenk nach Anspruch 23,
**dadurch gekennzeichnet**,
daß an den gradlinig und rechtwinklig auf definierte Länge beschnittenen Enden der Druckstäbe (15') Gleitschuhe (19', 21) aus einem gleitfähigen Werkstoff, insbesondere aus Kunststoff aufgesteckt sind, die gemeinsam die Funktionslänge der Druckstäbe (15') bilden, wobei die der Umfangsrille bzw. dem Umfangswulst (17) zugekehrte Kontaktfläche (24) der Gleitschuhe (19', 21) der Umfangsrille bzw. dem Umfangswulst (17) angepaßt ist.

25. Wellengelenk nach Anspruch 23,
**dadurch gekennzeichnet**,
daß die Druckstäbe (15) aus langfaser-verstärktem Kunststoff gebildet sind, wobei die Langfasern alle parallel zueinander und zur Längsachse der Druckstäbe (15) liegen und unterbrechungsfrei durchlaufen.

26. Wellengelenk nach Anspruch 23,
**dadurch gekennzeichnet**,
daß in den Faserwerkstoff und/oder den Matrix-Kunststoff der Druckstäbe (15) oder in den Werkstoff der Gleitschuhe Partikel eines Festschmierstoffes eingemischt sind.

27. Wellengelenk nach Anspruch 23,
**dadurch gekennzeichnet**,
daß die wirksame Länge (L) der Druckstäbe (15) alleine oder - im Falle von endseitig aufgesteckten Gleitschuhen - der Druckstäbe einschließlich der Gleitschuhe (19', 21) so bemessen ist, daß sie den Lichtraum zwischen zwei benachbarten Steckhülsen (7, 7') nur mit Spiel (16) ausfüllen.

28. Wellengelenk nach Anspruch 27,
**dadurch gekennzeichnet**,
daß das Spiel (16) der Druckstäbe (15) zwischen zwei benachbarten Steckhülsen (7) so groß bemessen ist, daß sie bei Drehmomentbelastung des Wellengelenkes (1) sich kraftübertragend erst dann in den Grund der Umfangsrillen (11) bzw. der Oberfläche des Umfangswulstes der Steckhülsen (7) anlegen, wenn die Mitnahmeschlingen (8) durch die Drehmomentbelastung bereits bis zu einer bestimmten Umfangskraft belastet und in Umfangsrichtung elastisch gedehnt sind.

29. Wellengelenk nach Anspruch 1,
**dadurch gekennzeichnet**,
daß alle Teile des Gelenkringes (6) in eine gummielastische Masse geringer Härte eingebettet und von ihr vollständig umschlossen sind.
